# EUROPÄISCHE PATENTSCHRIFT

(11) **EP 0 511 521 B1**
(45) Veröffentlichungstag und Bekanntmachung des Hinweises auf die Patenterteilung: **10.05.1995**
(21) Anmeldenummer: 92105882.2
(22) Anmeldetag: 06.04.1992
(51) Int. Cl.: G01G 3/14, G01G 21/24, G01L 1/22

(54) **Kraftmesszelle**
Force-measuring transducer
Transducteur de mesure de force

(30) Priorität: 30.04.1991 CH 1300/91
(43) Veröffentlichungstag der Anmeldung: 04.11.1992
(73) Patentinhaber: Mettler-Toledo AG, 8606 Greifensee (CH)
(72) Erfinder: Neeleman, Christiaan, CH-8032 Zürich (CH)
(74) Vertreter: Patentanwälte Leinweber & Zimmermann

(56) Entgegenhaltungen:
- EP-A- 0 050 708
- EP-A- 0 227 850
- CH-A- 353 555
- SOVIET INVENTIONS ILLUSTRATED, Section EI, Week 8823, 9. Juni 1988 Derwent Publications Ltd., London, GB; Class S, Page 23, AN 88-160425/23 & SU-A-1352256

## Beschreibung

Die Erfindung bezieht sich auf eine Kraftmeßzelle, insbesondere für eine Waage, gemäß dem Oberbegriff des Anspruchs 1.

Bei einer derartigen bekannten Waage (JP 53-80305, JP-Y2-2-5375) ist der Befestigungsbereich der Befestigungseinrichtung in der Form einer sich in einem Abstand zu dem jeweiligen Schenkel erstreckenden Befestigungsplatte ausgebildet, die mit dem Schenkel mittig durch eine den Verbindungsbereich bildende Materialbrücke einstückig zusammenhängt. In der Befestigungsplatte sind senkrecht zur Richtung des betreffenden Schenkels verlaufende Bohrungen ausgebildet, in welche Befestigungsschrauben ragen, mit welchen eine an der Befestigungsplatte vollständig und satt aufliegende Halteplatte des Waagentischträgers bzw. des Waagengehäuses angeschraubt ist.

Dadurch hängt der Verbindungsbereich ohne Unterbrechung mit dem Befestigungsbereich zusammen, wodurch sich die von den Befestigungsschrauben verursachten Spannungen aus dem Befestigungsbereich in den Verbindungsbereich und bis in die eigentliche Kraftmeßzelle hinein übertragen. Insbesondere werden durch die Berührung der Befestigungsplatte mit der Halteplatte im Bereich der Befestigungsschrauben Kräfte und Spannungen aus diesem Bereich direkt und ohne Unterbrechung über den Verbindungsarm an die Kraftmeßzelle weitergeleitet, welche die Meßergebnisse wesentlich verfälschen können.

Eine solche Befestigung ist nur in beschränktem Maß brauchbar, wogegen sie für eine Verwendung insbesondere in Hochgenauigkeitsbereichen nicht geeignet ist.

Die Aufgabe der Erfindung ist daher die Vermeidung der Nachteile des Standes der Technik und die Schaffung einer Kraftmeßzelle, welche auch in Hochgenauigkeitsbereichen keine Beeinträchtigungen des Meßergebnisses durch die Befestigung der Kraftmeßzelle an den Waagenbauteilen erfährt.

Diese Aufgabe wird erfindungsgemäß durch die Merkmale des Anspruchs 1 gelöst. Darüber hinaus kann eine solche Kraftmeßzelle die Merkmale der Ansprüche 2 bis 11 aufweisen. Weitere Einzelheiten und Merkmale der erfindungsgemäßen Kraftmeßzelle ergeben sich aus der Beschreibung von Ausführungsbeispielen anhand der Zeichnung. In dieser zeigt
- Fig. 1a: eine 1. Variante einer Kraftmeßzelle in Draufsicht,
- Fig. 1b: eine 1. Variante einer Kraftmeßzelle in Seitenansicht,
- Fig. 1c: die 1. Variante einer Kraftmeßzelle im Detail,
- Fig. 2: eine 2. Variante einer Kraftmeßzelle im Detail,
- Fig. 3: eine 3. Variante einer Kraftmeßzelle im Detail,
- Fig. 4: eine 4. Variante einer Kraftmeßzelle im Detail,
- Fig. 5: eine 5. Variante einer Kraftmeßzelle im Detail,
- Fig. 6: eine 6. Variante einer Kraftmeßzelle im Detail,
- Fig. 7: eine 7. Variante einer Kraftmeßzelle im Detail,
- Fig. 8: eine 8. Variante einer Kraftmeßzelle im Detail.

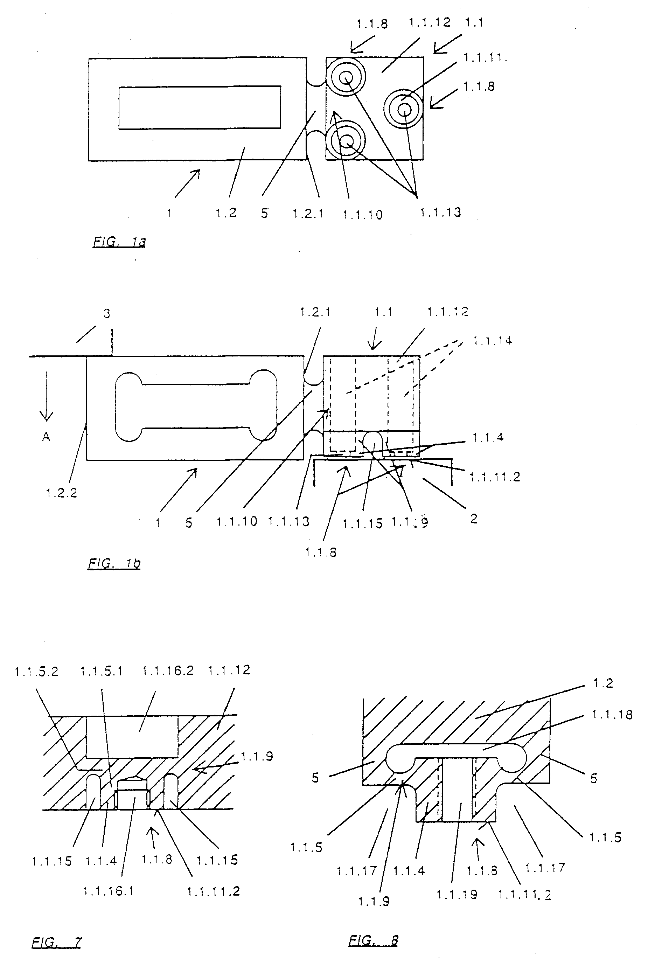

Eine Waage enthält gemäß Fig. 1a und b eine Kraftmeßzelle 1, die einerseits mit einem Waagengehäuse 2 als einem der Abstützung dienenden 1. Teil und andererseits mit einem Waagschalenträger 3 als einem der Krafteinleitung dienenden 2. Teil verbunden ist. Die Kraftmeßzelle 1 ist als ein Meßparallelogramm 1.2 ausgebildet, welches im Bereich seiner gegenüberliegenden, parallelogrammartig zueinander geführten Schenkel 1.2.1, 1.2.2 einerseits mittels einer Befestigungseinrichtung 1.1 an das Waagengehäuse 2 und andererseits - vorzugsweise mittels einer weiteren Befestigungseinrichtung 1.1 - an einen Waagschalenträger 3 je fest, aber lösbar angeschlossen ist. In den Figuren 1a und 1b ist nur gehäuseseits eine Befestigungseinrichtung 1.1 gemäß der Erfindung gezeigt; damit wird bereits eine gute Spannungs- und kräftemäßige Entkopplung zwischen dem Schenkel 1.2.1 und dem Waagengehäuse 2 erzielt. Bei höheren Anforderungen werden beidseits gleiche oder auch unterschiedlich gestaltete Befestigungseinrichtungen 1.1 verwendet, wie sie im folgenden beispielsweise beschrieben sind. Jede der Befestigungseinrichtungen 1.1 weist einerseits einen Befestigungsbereich 1.1.8 auf, der die Kontaktfläche der Befestigungseinrichtung 1.1 zu dem zu befestigenden Teil, in den dargestellten Ausführungsbeispielen zu dem Waagengehäuse 2 bzw. dem Waagschalenträger 3 bildet und andererseits einen Verbindungsbereich 1.1.10, durch den der betreffende Schenkel 1.2.1 bzw. 1.2.2 der Kraftmeßzelle 1 einstückig mit der Befestigungseinrichtung 1.1 zusammenhängt. Jeder Befestigungsbereich 1.1.8 ist durch wenigstens einen Übergangsbereich 1.1.9 von jedem Verbindungsbereich 1.1.10 entkoppelt. Insbesondere ist der Übergangsbereich 1.1.9 gemäß Fig. 1c und 2 bis 8 als ein möglichst schmaler Steg 1.1.5 ausgebildet, der die von dem Befestigungsbereich 1.1.8 mit dem zu befestigenden Teil zusammenspannenden Befestigungsmitteln 4 (Fig. 3) an den Befestigungsstellen 1.1.11 im Befestigungsbereich 1.1.8 verursachte Kraft- bzw. Spannungsausbreitung vom Verbindungsbereich 1.1.10 umlenkt und fernhält. Der Befestigungsbereich 1.1.8 enthält vorzugsweise eine Befestigungsnabe 1.1.4, welche mit ihrer inneren Stirnseite 1.1.11.1 eine Abstützfläche für das Befestigungsmittel 4 bildet und mit ihrer äußeren Stirnseite 1.1.11.2 zur Anlage an das Waagengehäuse 2 bzw. an den Waagschalenträger 3 bringbar ist, wobei das durch die Befestigungsnabe 1.1.4 hindurchgeführte Befestigungsmittel 4 beispielsweise eine Schraube ist. Dabei ist die Befestigungsnabe 1.1.4 durch den den Übergangsbereich 1.1.9 bildenden schmalen Steg 1.1.5 mit einem Grundkörper 1.1.12 der Befestigungseinrichtung 1.1 verbunden.

Bei der 1. Variante (Fig. 1a, 1b, 1c) einer Kraftmeßzelle 1 weist der Verbindungsbereich 1.1.10 einen den Schenkel 1.2.1 mit dem Grundkörper 1.1.12 einstückig verbindenden zentralen Verbindungsarm 5 auf. Quer zur Achsenrichtung des Verbindungsarmes 5 sind zur Aufnahme der Befestigungsschrauben 4 im Grundkörper 1.1.12 Bohrungen 1.1.13 ausgebildet, welche sich parallel zu den Schenkeln 1.2.1, 1.2.2 durch den ganzen Grundkörper 1.1.12 hindurch erstrecken. Die Befestigungsbereiche 1.1.8 sind jeweils an dem einen Ende jeder dieser Bohrungen 1.1.13 vorgesehen. Sie bestehen jeweils aus einer der Befestigungsnaben 1.1.4, welche mit der äußeren Stirnseite 1.1.11.2 im montierten Zustand zur Anlage an das Waagengehäuse 2 bzw. an den Waagschalenträger 3 gebracht ist und durch die ein Befestigungsmittel 4, beispielsweise eine Befestigungsschraube, gesteckt ist, welche das Waagengehäuse 2 bzw. den Waagschalenträger 3 mit der Befestigungseinrichtung 1.1 lösbar verbindet. An der inneren Stirnseite 1.1.11.1 liegt eine Mutter oder ein Kopf der Befestigungsschraube auf, wobei sich diese innere Stirnseite 1.1.11.1 in einem eine Senkbohrung 1.1.14 bildenden, radial erweiterten Abschnitt der Bohrung 1.1.13 befindet. Außerdem ist die äußere Stirnseite 1.1.11.2 der Befestigungsnabe 1.1.4 gegenüber dem Grundkörper 1.1.12 leicht vorspringend abgesetzt. In radialer Richtung seitlich neben der Befestigungsnabe 1.1.4 ist in dem Grundkörper 1.1.12 eine Nut 1.1.15 ausgebildet, welche sich von ihrem in einem an die äußere Stirnseite 1.1.11.2 angrenzenden Bereich gelegenen freien Ende aus axial in den Grundkörper 1.1.12 hineinerstreckt und welche zwischen sich und der Senkbohrung 1.1.14 als Übergangsbereich 1.1.9 einen schmalen Steg 1.1.5 bildet, der im Bereich des inneren stirnseitigen Endes 1.1.6 der Befestigungsnabe 1.1.4 seitlich an dieser angeordnet ist.

Anstelle der Nut 1.1.15 kann das seitlich neben der Befestigungsnabe 1.1.4 befindliche Material des Grundkörpers 1.1.12 bis zur benachbaraten Befestigungsnabe 1.1.4 auch ganz entfernt sein.

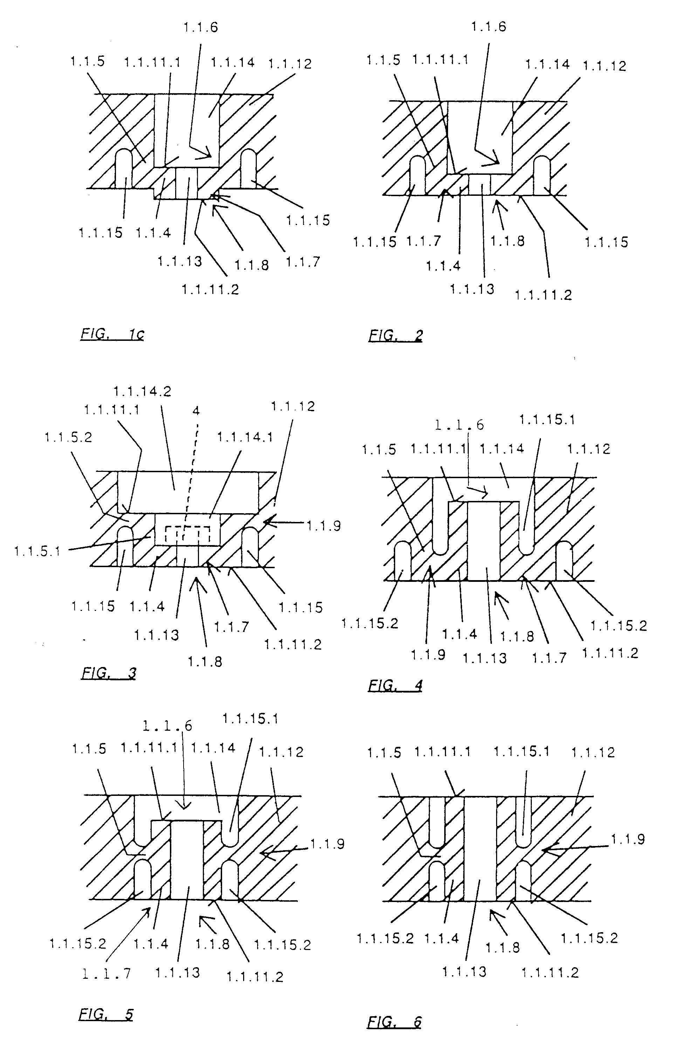

Eine 2. Variante (Fig. 1a, 1b, 2) einer Kraftmeßzelle 1 ist analog aufgebaut wie die Variante 1, doch fluchtet dabei die äußere Stirnseite 1.1.11.2 mit der Oberfläche des Grundkörpers 1.1.12. Dabei befindet sich in radialer Richtung seitlich neben der Befestigungsnabe 1.1.4 im Grundkörper 1.1.12 eine umlaufende Nut 1.1.15, welche zwischen sich und der Senkbohrung 1.1.14 einen schmalen Steg 1.1.5 als Übergangsbereich 1.1.9 bildet, der im Bereich des inneren stirnseitigen Endes 1.1.6 der Befestigungsnabe 1.1.4 seitlich an dieser angeordnet ist.

Eine 3. Variante (Fig. 1a, 1b, 3) einer Kraftmeßzelle 1 ist analog aufgebaut wie die Variante 1, wobei jedoch in radialer Richtung seitlich neben der Befestigungsnabe 1.1.4 sich im Grundkörper 1.1.12 eine umlaufende Nut 1.1.15 befindet, welche zwischen sich und der 1.Senkbohrung 1.1.14.1 einen 1. schmalen Steg 1.1.5.1 als Übergangsbereich 1.1.9 bildet, der im Bereich des inneren stirnseitigen Endes 1.1.6 der Befestigungsnabe 1.1.4 seitlich an dieser und seitlich zur 1.Senkbohrung 1.1.14.1 angeordnet ist. Anschließend an diese 1.Senkbohrung 1.1.14.1 ist koaxial zu ihr eine 2. Senkbohrung 1.1.14.2 angeordnet, deren Durchmesser im wesentlichen dem Außendurchmesser der Nut 1.1.15 entspricht. Dadurch wird noch ein zusätzlicher, 2. schmaler Steg 1.1.5.2 quer zum 1. schmalen Steg 1.1.5.1 in radialer Richtung zur 1. Senkbohrung 1.1.14.1 gebildet, bzw. der schmale Steg an sich weist einen L-förmigen Querschnitt auf.

Eine 4. Variante (Fig. 1a, 1b, 4) einer Kraftmeßzelle 1 ist im wesentlichen gleich aufgebaut wie bei Variante 1, wobei in radialer Richtung seitlich neben der Befestigungsnabe 1.1.4 im Grundkörper 1.1.12 in Fortsetzung der Senkbohrung 1.1.14 sich eine 1. umlaufende Nut 1.1.15.1 befindet. Ebenfalls in radialer Richtung seitlich neben der Befestigungsnabe 1.1.4 befindet sich im Grundkörper 1.1.12 eine 2. umlaufende Nut 1.1.15.2, welche sich von ihrem im Bereich der äußeren Stirnseite 1.1.11.2 gelegenen freien Ende aus axial in den Grundkörper 1.1.12 hineinerstreckt und welche zwischen sich und der 1. Nut 1.1.15.1 in radialer Richtung einen schmalen Steg 1.1.5 als Übergangsbereich 1.1.9 bildet, der im wesentlichen in einem Bereich zwischen dem inneren und dem äußeren stirnseitigen Ende 1.1.6 bzw. 1.1.7 der Befestigungsnabe 1.1.4 seitlich von dieser angeordnet ist.

Eine 5. Variante (Fig. 1a, 1b, 5) einer Kraftmeßzelle 1 ist im wesentlichen gleich aufgebaut wie bei Variante 1, wobei in radialer Richtung seitlich neben der Befestigungsnabe 1.1.4 im Grundkörper 1.1.12 in Fortsetzung der Senkbohrung 1.1.14 eine 1. Nut 1.1.15.1 angeordnet ist. Ebenfalls in radialer Richtung seitlich neben der Befestigungsnabe 1.1.4 befindet sich im Grundkörper 1.1.12 eine 2. umlaufende Nut 1.1.15.2, welche sich von ihrem im Bereich der äußeren Stirnseite 1.1.11.2 gelegenen freien Ende aus axial in den Grundkörper 1.1.12 hineinerstreckt und welche zwischen sich und der 1. umlaufenden Nut 1.1.15.1 in axialer Richtung einen schmalen Steg 1.1.5 als Übergangsbereich 1.1.9 bildet, der im Bereich zwischen dem inneren stirnseitigen Ende 1.1.6 und dem äußeren stirnseitigen Ende 1.1.7 der Befestigungsnabe 1.1.4 unmittelbar radial seitlich von dieser angeordnet ist. Die innere Stirnseite 1.1.11.1 liegt dabei axial innerhalb der Bohrung 1.1.14.

Eine 6. Variante (Fig. 1a, 1b, 6) einer Kraftmeßzelle 1 ist im wesentlichen gleich aufgebaut wie bei der Variante 1, wobei an der inneren Stirnseite 1.1.11.1 eine Mutter oder ein Kopf der Befestigungsschraube 4 aufliegt und diese innere Stirnseite 1.1.11.1 mit der oberen Endfläche des Grundkörpers 1.1.12 bündig ist. In radialer Richtung seitlich neben der Befestigungsnabe 1.1.4 befindet sich im Grundkörper eine 1. Nut 1.1.15.1. Ebenfalls in radialer Richtung seitlich neben der Befestigungsnabe 1.1.4 befindet sich im Grundkörper eine 2. umlaufende Nut 1.1.15.2 welche sich von ihrem im Bereich der äußeren Stirnseite 1.1.11.2 gelegenen freien Ende aus axial in den Grundkörper 1.1.12 hineinerstreckt und welche zwischen sich und der 1. umlaufenden Nut 1.1.15.1 in axialer Richtung einen schmalen Steg 1.1.5 als Übergangsbereich 1.1.9 bildet, der in einem Bereich zwischen den Stirnseiten 1.1.11.1 und 1.1.11.2 der Befestigungsnabe 1.1.4 unmittelbar radial seitlich von dieser angeordnet ist. Bei dieser Variante fallen die innere und die äußere Stirnseite 1.1.11.1 bzw. 1.1.11.2 je mit der entsprechenden Außenfläche des Grundkörpers 1.1.12 zusammen, d.h. die Befestigungsnabe 1.1.4 hat die gleiche Dimension wie der Grundkörper 1.1.12 in diesem Abschnitt.

Bei einer 7. Variante (Fig. 1a, 1b, 7) einer Kraftmeßzelle 1 befinden sich im Grundkörper 1.1.12 quer zur Achsenrichtung des Verbindungsarmes 5 1. Sackbohrungen 1.1.16.1 mit Gewinden, welche nicht bis an den Grund der 1. Sackbohrungen reichen, für Befestigungsschrauben 4. Jede dieser 1. Sackbohrungen 1.1.16.1 ist von je einem Befestigungsbereich 1.1.8 umgeben. Dieser besteht aus einer Befestigungsnabe 1.1.4, welche mit der äußeren Stirnseite 1.1.11.2 im montierten Zustand zur Anlage an das Waagengehäuse 2 bzw. an den Waagschalenträger 3 gebracht ist und in die ein Befestigungsmittel 4, beispielsweise eine Befestigungsschraube, geschraubt ist, welche das Waagengehäuse 2 bzw. den Waagschalenträger 3 mit der Befestigungseinrichtung 1.1. lösbar verbindet. In radialer Richtung seitlich neben der Befestigungsnabe 1.1.4 befindet sich im Grundkörper 1.1.12 eine umlaufende Nut 1.1.15, welche in ihrer Tiefe im wesentlichen der Tiefe der 1. Sackbohrung 1.1.16.1 entspricht. An dem im Grundkörper 1.1.12 integrierten Ende der Befestigungsnabe 1.1.4 ist zwischen der Nut 1.1.15 und dem inneren Ende der 1. Sackbohrung 1.1.16.1 in axialer Richtung ein 1. schmaler Steg 1.1.5.1 als Übergangsbereich 1.1.9 gebildet, der an der Befestigungsnabe 1.1.4 unmittelbar radial seitlich von dieser angeordnet ist. Koaxial zur 1. Sackbohrung 1.1.16.1 mit dem Gewinde ist von der gegenüberliegenden Seite des Grundkörpers 1.1.12 eine 2. Sackbohrung 1.1.16.2 mit einem Durchmesser etwa gleich dem Durchmesser der Nut 1.1.15 angeordnet, welche mit ihrem Grund in die Nähe der Nut 1.1.15 reicht und so zwischen Nut und Sackbohrung einen radial gerichteten 2. schmalen Steg 1.1.5.2 bildet. Zusammen mit dem 1. schmalen Steg 1.1.5.1 weist der gesamte schmale Steg 1.1.5 L-förmigen Querschnitt auf. An den das Gewinde aufweisenden Befestigungsbereich 1.1.8 schließt sich der durch den schmalen Steg 1.1.5 gebildete Übergangsbereich 1.1.9 an, der monolithisch mit dem Grundkörper 1.1.12 ausgebildet ist. Dieser ist ebenfalls monolithisch mit dem Verbindungsarm 5 des Verbindungsbereichs 1.1.10 der mit der Kraftmeßzelle 1 monolithischen Befestigungseinrichtung 1.1 ausgebildet.

Bei der 8. Variante (Fig. 1a, 1b, 8) einer Kraftmeßzelle 1 hängt der Grundkörper 1.1.12 der Befestigungseinrichtung 1.1 mit zwei Verbindungsarmen 5 mit der Kraftmeßzelle 1 einstückig zusammen. Parallel zur Achsenrichtung der Verbindungsarme 5 befindet sich im Grundkörper 1.1.12 eine Gewindebohrung 1.1.19 für eine Befestigungsschraube 4. Diese Gewindebohrung 1.1.19 ist von einem Befestigungsbereich 1.1.8 umgeben. Dieser besteht aus einer Befestigungsnabe 1.1.4, welche mit der äußeren Stirnseite 1.1.11.2 im montierten Zustand zur Anlage an das Waagengehäuse 2 bzw. an den Waagschalenträger 3 gebracht ist und in die ein Befestigungsmittel 4, beispielsweise eine Befestigungsschraube, geschraubt ist, welche das Waagengehäuse 2 bzw. den Waagschalenträger 3 mit der Befestigungseinrichtung 1.1 lösbar verbindet. In radialer Richtung seitlich neben der Befestigungsnabe 1.1.4 befindet sich im Grundkörper 1.1.12 eine äußere Ausnehmung 1.1.17, deren Tiefe geringer als die Tiefe der Gewindebohrung 1.1.19 ist. Am axial inneren Ende der Befestigungsnabe 1.1.4 ist eine sich quer zur Achse erstreckende zentrale Ausnehmung 1.1.18 vorgesehen, welche mit ihren seitlichen Enden an die beiden Verbindungsarme 5 heranreicht und zwischen diesen und der Befestigungsnabe 1.1.4 eine innen liegende Nut bildet, welche zusammen mit der äußeren Ausnehmung 1.1.17 einen schmalen Steg 1.1.5 als Übergangsbereich 1.1.9 formt, der an der Befestigungsnabe 1.1.4 unmittelbar seitlich von dieser angeordnet ist. An den die Gewindebohrung 1.1.19 aufweisenden Befestigungsbereich 1.1.8 schließt sich der durch den schmalen Steg 1.1.5 gebildete Übergangsbereich 1.1.9 an, der monolithisch mit jedem Verbindungsarm 5 als dem mit der Kraftmeßzelle 1 verbundenen Verbindungsbereich 1.1.10 ausgebildet ist. Dadurch ist der Verbindungsbereich 1.1.10 durch zwei entkoppelte Verbindungsarme 5 verwirklicht.

Bei allen Ausführungsformen der Befestigungseinrichtung 1.2 ist der Verbindungsbreich 1.1.10 nicht direkt mit dem Befestigungsbereich 1.1.8 verbunden, sondern zwischen beiden liegt eine durch den Übergangsbereich 1.1.9 bewirkte Unterbrechung, wodurch sich die Spannungen aus dem Befestigungsbereich 1.1.8 in den Verbindungsbereich 1.1.10 nicht übertragen. Insbesondere werden im Bereich der Achse jedes Verbindungsarmes 5 Kräfte und Spannungen aus dem Befestigungsbereich 1.1.8 gar nicht oder doch nur wesentlich abgeschwächt über den Verbindungsarm 5 an die Kraftmeßzelle 1 weitergeleitet. Dadurch werden wesentlich genauere Meßergebnisse erzielt.

Die erfindungsgemäße Kraftmeßzelle 1 ist in bzw. mit verschiedenen Kraftmeßprinzipien verwendbar. Als Beispiele seien Zellen mit Dehnmeßstreifen oder mit schwingenden Saiten als Meßelementen genannt. Parallelogrammeßzellen mit solchen Meßelementen sind bekannt; auf die Zeichnung und Beschreibung des Einbaues bzw. Anbaues der Meßelemente konnte daher verzichtet werden, zumal die für das Verständnis der vorliegenden Erfindung unerheblich ist.

## Patentansprüche

1. Kraftmesszelle (1), insbesondere für eine Waage, mit zwei einander gegenüberliegenden, parallelogrammartig miteinander verbundenen Schenkein (1.2.1; 1.2.2), in deren einen (1.2.2) die Messkraft einleitbar ist, und mit mindestens einer Befestigungseinrichtung (1.1), die einerseits durch einen Verbindungsbereich (1.1.10) mit einem der Schenkel (1.2.1) zusammenhängt und andererseits durch einen Befestigungsbereich (1.1.8) an einem diesem Schenkel (1.2.1) zugeordneten Teil (2) festgelegt ist, dadurch gekennzeichnet, dass die Befestigungseinrichtung (1.1) zwischen dem Verbindungsbereich (1.1.10) und dem Befestigungsbereich (1.1.8) einen den Verbindungsbereich von dem Befestigungsbereich spannungs- und kräftemässig entkoppelnden Uebergangsbereich (1.1.9) aufweist.

2. Kraftmeßzelle nach Anspruch 1, dadurch gekennzeichnet, daß der Übergangsbereich (1.1.9) als möglichst schmaler Steg (1.1.5) ausgebildet ist, der den durch den Befestigungsbereich (1.1.8) mit dem zu befestigenden Teil (2, 3) zusammenspannende Befestigungsmittel (4) an den Befestigungsstellen (1.1.11) im Befestigungsbereich (1.1.8) verursachten Kraft- bzw. Spannungsfluß vor dem Verbindungsbereich (1.1.10) umlenkt bzw. von ihm entkoppelt.

3. Kraftmeßzelle nach Anspruch 1 oder 2, dadurch gekennzeichnet, daß der Befestigungsbereich (1.1.8) eine Befestigungsnabe (1.1.4) aufweist, welche mit einer ihrer Stirnseiten (1.1.11.2) zur Anlage an dem zu befestigenden Teil (2, 3) bringbar und in die ein Befestigungsmittel (4) einführbar ist, wobei die Befestigungsnabe (1.1.4) mit schmalen Stegen (1.1.5) mit einem Grundkörper (1.1.12) der Befestigungseinrichtung (1.1) verbunden ist, der seinerseits den Verbindungsbereich (1.1.10) aufweist.

4. Kraftmeßzelle nach Anspruch 3, dadurch gekennzeichnet, daß die schmalen Stege (1.1.5) im Bereich des dem zu befestigenden Teil (2, 3) abgewandten, eines stirnseitigen Endes (1.1.6) der Befestigungsnabe (1.1.4) seitlich an dieser angeordnet sind.

5. Kraftmeßzelle nach Anspruch 3, dadurch gekennzeichnet, daß die schmalen Stege (1.1.5) im Bereich des dem zu befestigenden Teil (2,3) zugewandten anderen stirnseitigen Endes (1.1.7) der Befestigungsnabe (1.1.4) seitlich an dieser angeordnet sind.

6. Kraftmeßzelle nach Anspruch 3, dadurch gekennzeichnet, daß die schmalen Stege (1.1.5) im Bereich der axialen Nabenmitte der Befestigungsnabe (1.1.4) seitlich an dieser angeordnet sind.

7. Kraftmeßzelle nach Anpruch 3, dadurch gekennzeichnet, daß die schmalen Stege (1.1.5) im Bereich des einen stirnseitigen Endes (1.1.6) der Befestigungsnabe (1.1.4) stirnseitig an diesem Ende angeordnet sind.

8. Kraftmeßzelle nach Anspruch 3, dadurch gekennzeichnet, daß die schmalen Stege (1.1.5) im Bereich des anderen stirnseitigen Endes (1.1.7) der Befestigungsnabe (1.1.4) stirnseitig an diesem Ende angeordnet sind.

9. Kraftmeßzelle nach einem der Ansprüche 1 bis 8, dadurch gekennzeichnet, daß der Verbindungsbereich (1.1.10) der Befestigungseinrichtung (1.1.) wenigstens einen mit dem betreffenden Schenkel (1.2.1; 1.2.2) einstückig zusammenhängenden Verbindungsarm (5) aufweist.

10. Kraftmeßzelle nach einem der Ansprüche 3 bis 9, dadurch gekennzeichnet, daß die Achse der Befestigungsnabe (1.1.4) parallel zur Auslenkrichtung (A) der Kraftmeßzelle (1) angeordnet ist.

11. Kraftmeßzelle nach einem der Ansprüche 3 bis 9, dadurch gekennzeichnet, daß die Achse der Befestigungsnabe (1.1.4) senkrecht zur Auslenkrichtung (A) der Kraftmeßzelle (1) angeordnet ist.

## Claims

1. A force measuring cell (1), in particular for a weighing apparatus, having two mutually oppositely disposed limbs (1.2.1; 1.2.2) which are connected together in a parallelogram-like arrangement and to one of which (1.2.2) the force to be measured can be applied, and at least one fixing means (1.1) which on the one hand is connected to one of the limbs (1.2.1) by a connecting region (1.1.10) and which on the other hand is secured by a fixing region (1.1.8) to a portion (2) associated with said limb (1.2.1), characterised in that between the connecting region (1.1.10) and the fixing region (1.1.8) the fixing means (1.1) has a transitional region (1.1.9) which decouples the connecting region from the fixing region in respect of stresses and forces.

2. A force measuring cell according to claim 1 characterised in that the transitional region (1.1.9) is in the form of a web (1.1.5) which is as narrow as possible and which diverts in front of the connecting region (1.1.10) or decouples from the connecting region (1.1.10), the flow of forces or stresses caused at the fixing locations (1.1.11) in the fling region (1.1.8) by fixing members (4) which clamp the fixing region (1.1.8) to the portion (2, 3) to be fixed.

3. A force measuring cell according to claim 1 or claim 2 characterised in that the fixing region (1.1.8) has a fixing hub (1.1.4) which can be brought to bear with one of its end faces (1.1.11.2) against the portion (2, 3) to he fixed and into which can he introduced a fixing member (4), wherein the fixing hub (1.1.4) is connected by narrow webs (1.1.5) to a main body (1.1.12) of the fixing means (1.1), which main body in turn has the connecting region (1.1.10).

4. A force measuring cell according to claim 3 characterised in that the narrow webs (1.1.5) are arranged laterally on the fixing hub (1.1.4) in the region of the one end (1.1.6) of the fixing hub (1.1.4), which end is remote from the portion (2, 3) to be fixed.

5. A force measuring cell according to claim 3 characterised in that the narrow webs (1.1.5) are arranged laterally on the fixing hub (1.1.4) in the region of the other end (1.1.7) of the fixing hub (1.1.4), which end is towards the portion (2, 3) to be fixed.

6. A force measuring cell according to claim 3 characterised in that the narrow webs (1.1.5) are arranged laterally on the fixing hub (1.1.4) in the region of the axial middle of the fixing hub (1.1.4).

7. A force measuring cell according to claim 3 characterised in that the narrow webs (1.1.5) are arranged in the region of the one end (1.1.6) of the fixing hub (1.1.4) at said end at the face thereof.

8. A force measuring cell according to claim 3 characterised in that the narrow webs (1.1.5) are arranged in the region of the other end (1.1.7) of the fixing hub (1.1.4) at said end at the face thereof.

9. A force measuring cell according to one of claims 1 to 8 characterised in that the connecting region (1.1.10) of the fixing means (1.1) has at least one connecting arm (5) which is integrally connected to the limb (1.2.1; 1.2.2) in question.

10. A force measuring cell according to one of claims 3 to 9 characterised in that the axis of the fixing hub (1.1.4) is arranged parallel to the direction (A) of deflection of the force measuring cell (1).

11. A force measuring cell according to one of claims 3 to 9 characterised in that the axis of the fixing hub (1.1.4) is arranged perpendicularly to the direction (A) of deflection of the force measuring cell (1).

## Revendications

1. Cellule dynamométrique (1), en particulier pour une balance, comprenant deux branches opposées (1.2.1 ; 1.2.2) reliées à la manière d'un parallélogramme et dans l'une desquelles (1.2.2) la force de mesure peut être dirigée, ainsi qu'au moins un dispositif de fixation (1.1) qui d'une part est assujetti par une zone de liaison (1.1.10) à l'une (1.2.1) des branches et d'autre part est fixé par une zone de fixation (1.1.8) à un élément (2) associé à cette branche (1.2.1), caractérisée en ce que le dispositif de fixation (1.1) comporte entre la zone de liaison (1.1.10) et la zone de fixation (1.1.8) une zone de transition (1.1.9) qui découple la zone de liaison de la zone de fixation en ce qui concerne les tensions et les forces.

2. Cellule dynamométrique selon la revendication 1, caractérisée en ce que la zone de transition (1.1.9) est conformée en barrette (1.1.5) aussi étroite que possible qui fait dévier de la zone de liaison (1.1.10) et l'en découple le flux de forces et de tensions qui est provoqué par l'organe de fixation (4) assujettissant la zone de fixation (1.1.8) à l'élément devant être fixé (2, 3) aux points de fixation (1.1.11) situés dans la zone de fixation (1.1.8).

3. Cellule dynamométrique selon la revendication 1 ou 2, caractérisée en ce que la zone de fixation (1.1.8) comprend une colonnette creuse de fixation (1.1.4), dont l'un (1.1.11.2) des côtés extrêmes est destiné à être mis en appui contre l'élément devant être fixé (2, 3) et dans laquelle un organe de fixation (4) peut être introduit, la colonnette creuse de fixation (1.1.4) étant reliée par des barrettes étroites (1.1.5) à un corps de base (1.1.12) du dispositif de fixation qui comprend de son côté la zone de liaison (1.1.10).

4. Cellule dynamométrique selon la revendication 3, caractérisée en ce que les barrettes étroites (1.1.5) sont disposées dans la zone de l'extrémité (1.1.6) d'un côté extrême, tourné à l'opposé de l'élément à fixer (2, 3), de la colonnette creuse de fixation (1.1.4), sur le côté de celle-ci.

5. Cellule dynamométrique selon la revendication 3, caractérisée en ce que les barrettes étroites (1.1.5) sont disposées dans la zone de l'extrémité (1.1.7) de l'autre côté extrême, qui est tourné vers l'élément devant être fixé (2, 3), de la colonnette creuse de fixation (1.1.4), sur le côté de celle-ci.

6. Cellule dynamométrique selon la revendication 3, caractérisée en ce que les barrettes étroites (1.1.5) sont disposées dans la zone du milieu axial de la colonnette creuse de fixation (1.1.4), sur le côté de celle-ci.

7. Cellule dynamométrique selon la revendication 3, caractérisée en ce que les barrettes étroites (1.1.5) sont disposées dans la zone de l'extrémité (1.1.6) située sur un côté extrême de la colonnette creuse de fixation (1.1.4), sur le côté extrême de cette extrémité.

8. Cellule dynamométrique selon la revendication 3, caractérisée en ce que les barrettes étroites (1.1.5) sont disposées dans la zone de l'extrémité (1.1.7) de l'autre côté extrême de la colonnette creuse de fixation (1.1.4), sur le côté extrême de cette extrémité.

9. Cellule dynamométrique selon l'une des revendications 1 à 8, caractérisée en ce que la zone de liaison (1.1.10) du dispositif de fixation (1.1) comprend au moins un bras de liaison (5) qui est assujetti en une pièce à la branche concernée (1.2.1 ; 1.2.2).

10. Cellule dynamométrique selon l'une des revendications 3 à 9, caractérisée en ce que l'axe de la colonnette creuse de fixation (1.1.4) est disposé parallèlement à la direction de fléchissement (A) de la cellule dynamométrique (1).

11. Cellule dynamométrique selon l'une des revendications 3 à 9, caractérisée en ce que l'axe de la colonnette creuse de fixation (1.1.4) est disposé perpendiculairement à la direction de fléchissement (A) de la cellule dynamométrique (1).
